# EUROPEAN PATENT APPLICATION

(11) **EP 1 475 581 A1**
(43) Date of publication of application: **10.11.2004**
(21) Application number: 03010448.3
(22) Date of filing: 09.05.2003
(51) Int. Cl.: F24J 2/07, B01J 19/12, B01J 19/28

(54) **Reactor for indirect utilization of external radiation heat**

(71) Applicant: PAUL SCHERRER INSTITUT, 5232 Villigen PSI (CH); Qualical SrL, 24121 Bergamo (IT)
(72) Inventor: Meier, Anton, 5236 Remigen (CH); Wuillemin, Daniel, 5326 Remigen (CH); Lipinski, Wojciech, 5200 Brugg (CH); Cella, Gian Mario, 24121 Bergamo (IT); Bonaldi, Enrico, 24100 Bergamo (IT)
(74) Representative: Fischer, Michael, Dr.

(57) **Abstract**

A reactor for indirect utilization of external radiation heat for thermal or thermochemical material processes is disclosed, comprising:
an absorber cavity (8) having a substantially cylindrical shape, said absorber cavity (8) being at least partially lined with an insulation layer (3) and being disposed in a containment can (1);
said absorber cavity (8) comprising a radiant absorber assembly;
said radiant absorber assembly comprising a substantially cylindrical absorber or reflection mantle (4), a number of absorber tubes (5), and a rear wall (6) of absorber or reflection type;
said absorber tubes (5) being disposed inside said mantle (4) and being oriented substantially parallel to the longitudinal axis (A) of said mantle (4),
said rear wall (6) and said containment can (1) defining a preheating chamber (9),
said absorber cavity (8) having an aperture (7) allowing the radiant absorber assembly to be heated by the external radiation heat (S).

## Description

The invention relates to a reactor for indirect utilization of external radiation heat for thermal or thermochemical material processes.

In many chemical processes, solids need to be heated to high temperatures for the chemical reaction to proceed. If the reaction temperature is exceeding the operating temperature of conventional metals like steel, the apparatus has to be made from alternative high-temperature resistant materials. Examples of such energy-intensive high-temperature processes with considerable CO₂ emissions are the processing of lime and cement as well as the reduction of metal oxides.

Most commercial high-temperature processes involving gas-solid reactions are conducted in rotary kilns. For some processes, the process heat may be provided indirectly through the kiln wall; predominantly, however, it is produced directly in the furnace by combusting fossil fuels. Direct-fired rotary kilns suffer from the disadvantage that the reaction product may come in contact with hot combustion gases and thus will be contaminated.

For the production of lime, besides rotary kilns also vertical shaft kilns are utilized. Those vertical kilns have a much higher efficiency (up to 85%) compared to conventional rotary kilns (35%, or even 50% with heat recovery). However, they can use only relatively large-sized limestone and are limited in the choice of the fuel. Although in vertical shaft kilns the fuel is burnt in an external chamber, the hot combustion gases still come in contact with the limestone and the lime. All current commercial applications suffer from the fact that heat recovery from the dust-laden gases is complicated and economically precluded.

Different types of solar reactors are known, even solar rotary kilns. However, they usually utilize direct sunlight as heat source. The solar energy is concentrated in a solar concentrator and focused through an aperture into the reaction chamber that is often tightly closed by a transparent window. Such applications locally yield high energy densities; however, they are not well suited for surface or volumetric processing of materials. These disadvantages also apply to a reactor for using solar radiation heat for thermal or thermochemical processing as disclosed in the international patent application WO 03/004942 A1. Said reactor comprises a reactor housing having an opening for penetrating a volumetric absorber with the incident solar radiation in order to provide heat to a reaction chamber that is located at the back side of the volumetric absorber.

Therefore, it is the task of the present invention to provide a reactor of the mentioned type that is heated by an external radiation heat source, in particular concentrated solar radiation, which is particularly well suited for the efficient utilization of indirect radiation heat for thermal or thermochemical processing of different materials at high temperatures, whereby especially the quality of the reaction product is not adversely affected by dust and combustion gases.

This task is solved according to the invention by a reactor for indirect utilization of external radiation heat for thermal or thermochemical material processes, comprising:
a) a containment can having a longitudinal axis,
b) an external drive mechanism for controllably rotating the containment can and an external tilt mechanism to deviate said longitudinal axis from a horizontal orientation into an inclined position;
c) an absorber cavity having a substantially cylindrical shape, said absorber cavity being at least partially lined with an insulation layer and being placed in said containment can,
d) said absorber cavity comprising a radiant absorber assembly,
e) said radiant absorber assembly comprising a substantially cylindrical absorber or reflection mantle, a number of absorber tubes and a rear wall of absorber or reflection type;
f) said absorber tubes having an inlet and an outlet and being placed inside said absorber or reflection mantle and being oriented substantially parallel to the longitudinal axis of said absorber or reflection mantle,
g) said rear wall and said containment can defining a preheating chamber connected to the inlet of the absorber tubes, and
h) said absorber cavity having an aperture allowing the radiant absorber assembly to be heated by the external radiation heat in order to provide the external radiation heat to said preheating chamber and said absorber tubes, such that an organic and/or inorganic and/or metallic and/or ceramic material or a mixture thereof are subject to thermal or thermochemical material processing under controlled residence time and/or temperature conditions.

These features lead to a reactor that delivers the heat indirectly through comparably large surfaces to the radiant absorber assembly for the thermal or thermochemical processing of the feed material that is continuously conveyed and homogeneously heated by controlling the speed of rotation and the inclined position. In contrast to conventional processes, a homogeneous and clean thermal or thermochemical processing of materials is ensured. These measures yield high quality of the reaction product, confirming that the method of this invention constitutes an essential engineering progress.

In order to generate a satisfactorily efficient processing, said radiant absorber assembly is heating a feed material in said preheating chamber and in said absorber tubes. Due to the preheating treatment of the feed material in the preheating chamber, the length of the absorber tubes and, therefore, the length of the complete reactor can be made shorter, which decreases the spatial demands for the reactor and the spatial demands for the reactor components.

An additional goal with respect to environmental protection can be achieved when said external radiation source is concentrated solar energy. In comparison to conventional fossil fired kilns the present reactor helps to at least significantly reduce CO₂ emissions.

The quality of the feed material and the quality and/or quantity demands for the reaction product may differ from case to case what requires certain flexibility with respect to the process parameters. Therefore, said external drive mechanism and/or said inclined position can be controlled in order to effect an appropriate flow of the feed material starting from the preheating chamber, entering through the inlets into said absorber tubes and passing through the absorber tubes to the outlets of said absorber tubes while being thermally or thermochemically processed in said preheating chamber and/or absorber tubes. Generally, the residence time of the feed material can be decreased by increasing the speed of rotation and/or the angle of the inclined position and vice versa.

In order to simplify the constructive measures of the reactor, said containment can may preferably rotate around its longitudinal axis. It should be mentioned that the containment can may alternatively rotate around an arbitrary axis. The same as afore-mentioned applies additionally or alternatively to the absorber tubes that may preferably rotate around their own longitudinal axis. That means in detail that the mantle of the absorber assembly and the absorber tubes of the absorber assembly may rotate separately or mutually relatively to each other.

For the continuity of the process and the flow of the feed material, a reaction product originating from the feed material is continuously removed through the outlets of the absorber tubes. Therefore, a ring-channel-shaped collector can be provided for collecting the reaction product even when the containment can and/or the absorber tubes are rotating.

An advantageous design of the outlets can be achieved when said outlets are placed at the end of the absorber tubes as seen in the flow direction of the feed material and are oriented outwardly, preferably through the insulation layer and through the outer shell of the containment can. Likewise, the reaction product, a process gas, like CO₂, can be continuously removed.

By collecting the removed process gas and preheating the feed material with the collected process gas the energy balance of the process can be improved.

Depending on both the desired residence time of the feed material and the desired abrasion, the cross-sectional shape of the absorber tubes may have a wide variety of possible shapes. With respect to their availability, said absorber tubes may have circular, triangular, square, rectangular, trapezoidal, or hexagonal cross-sectional shape.

Both the lifetime of the reactor and the homogeneity of the temperature distribution are significantly a function of the material properties of the used materials of construction. Therefore, said radiant absorber assembly can be made from a high-temperature resistant and thermally conductive ceramic material, preferably from silicon carbide. In order to minimize the heat losses, said absorber tubes, said absorber rear wall, and said preheating chamber are sealed against said absorber cavity.

The external radiation entering the absorber assembly through the aperture may have an average power flux density of several MW per m² when concentrated solar radiation is used. Therefore, a heat shield is provided to protect the edges of said aperture from said concentrated external radiation heat. The heat shield can be made from a heat resistant material or can be made from a fluid-cooled metal, preferably aluminium or copper. Additionally, the heat shield can be suitably ring-shaped and comprises said aperture of said absorber cavity. To diminish the convection heat losses from the absorber cavity, said absorber cavity may comprise a gas-cooled transparent window for said incident external radiation heat. For the purpose of increasing the solar gain, said aperture may comprise a secondary concentrator.

Depending on the weather conditions and/or the geographical region in which the reactor is installed, an alternative heating source might be necessary to generate or maintain the required reaction temperature for the feed material in the preheating chamber and/or in the absorber tubes. Therefore, said absorber cavity comprises a conventional external heat source, such as oil or gas burners, plasma burner, light arcs, induction heating, direct and/or indirect electric heating elements. An advantageous solution for the availability of the conventional external heat source may derive from its introduction through said aperture in place of said external solar radiation heat in order to continuously supply heat in case of insufficient or missing solar radiation energy.

The reactor is generally suited for all thermal or thermochemical material processes, which allows to use as the feed material any type of organic, inorganic, metallic, or ceramic solids, as well as mixtures of them, which are then subject to said thermal or said thermochemical material processing. Especially, fine-grained materials, such as limestone, are preferred to generate a reaction product, such as lime, which is then completely free from any combustion gases. Therefore, the reactor according to this invention is particularly suited for the clean processing of a variety of fine-grained materials at temperatures up to 1600 K. Utilizing this invention, some processing operations, which are currently carried out in direct-fired rotary kilns, for example that of lime production, may be more economical due to energy savings and other benefits of the reactor design of this invention.

Further advantageous features result from the dependent claims, the following description, and the drawings.

For one preferred embodiment of a reactor according to the present invention, the principle of the invention is described and illustrated in the appended drawings.
- Figure 1: is a schematic cross-sectional side view of an embodiment of the reactor;
- Figure 2: is a schematic cross-sectional side view of an embodiment of the reactor according to the present invention, including optional components for solar operation; and
- Figure 3: is a schematic cross-sectional side view of an embodiment of the reactor according to the present invention, including optional components for conventional operation.

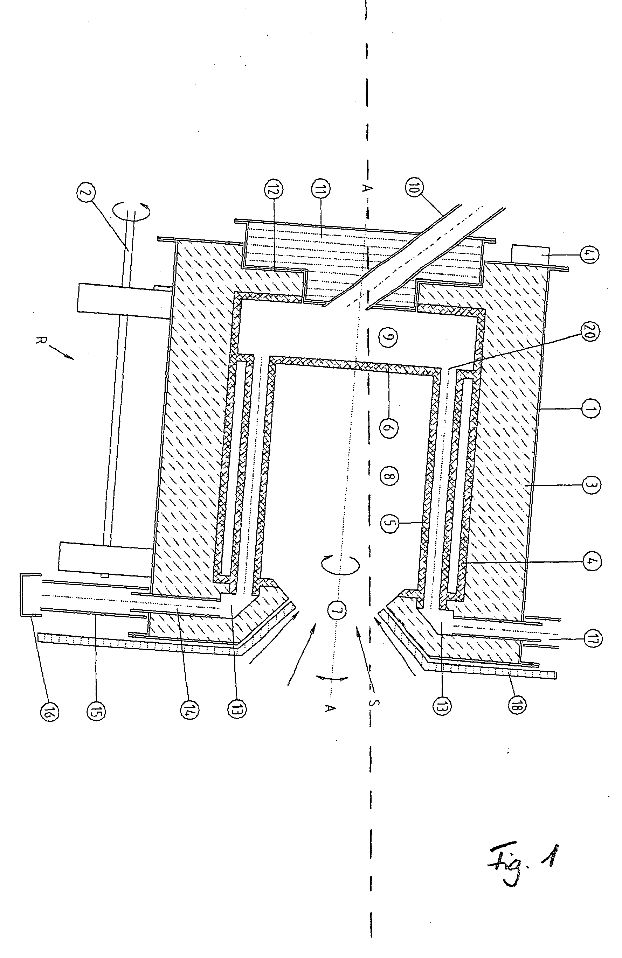

With reference to Fig. 1, the reactor R according to the present invention comprises a containment can 1 that can be tilted versus the horizontal axis by a tilt mechanism (not shown in detail) and rotated around its longitudinal axis A-A by means of an external drive mechanism 2. The tilt angle and the speed of rotation have a significant impact on the residence time of the feed material in the reactor R, in detail in the material flow path of the reactor R, which is described below. Within the containment can 1, a high-temperature resistant thermal insulation layer 3 is tightly mounted.

Within the interior of the reactor R, a specially designed high-temperature resistant and thermally well conducting radiant absorber assembly is tightly inserted into the insulation layer 3. The radiant absorber assembly comprises an outer absorber mantle 4, a multitude of absorber tubes 5, and an absorber rear wall 6. Opposite to the absorber rear wall 6, there is an aperture 7 for the incident concentrated solar radiation S. The construction of the absorber assembly, i.e. the absorber mantle 4, the absorber tubes 5, and the absorber rear wall 6 is tight against the absorber cavity 8.

Behind the absorber rear wall 6 preheating chamber 9 is located, where the solid feed material is preheated to a temperature near the reaction temperature before entering the absorber tubes 5 via their inlets 20. Due to this special arrangement, the length of the absorber tubes 5 can be made shorter than in an arrangement without preheating.

The feed material, preferably fine-grained solid material, is fed through a feeding device 10 into the preheating chamber 9. The feeding device 10 is part of a conventional feeding system according to the state-of-the art (not shown) and is leading through a non-rotating cap 11 at the rear side of the reactor R. A specially designed labyrinth-like seal 12 prevents feed material from flowing out of preheating chamber 9 and minimizes heat losses.

The absorber tubes 5 are directed to convey the feed material such that it is homogeneously heated. The flow rate of the feed material is controlled by the feed rate and by mutually adjusting the cross-sectional area of the absorber tubes 5, the tilt angle of the reactor R, and the speed of rotation of the individual absorber tubes 5 or of the entire reactor R. The rotation provides a good mixing of the feed material moving through the reactor.

The solid reaction product leaves the absorber tubes 5 at the material outlet port 13, which is designed as a ring channel. The reaction product leaves said ring channel through multiple radial outlet tubes 14 and falls through a vertical down-pipe attached to a ring-channel shaped collector 15 into an external collecting bin 16 for further processing. The gaseous reaction product leave the absorber tubes 5 through the outlet tubes 14 and may be directed through a collecting tube 17 to a gas cleaning system (not shown) to be either delivered to the atmosphere or to serve for preheating the feed material.

At the front, a shield 18 made from heat resistant ceramic material or from water-cooled metal may be mounted stationary to protect the reactor R from destruction by concentrated sunlight entering through the opening 7 into the absorber cavity 8. The conical shape of the shield 18 is determined by the special shape of the solar concentrator (not shown); the diameter of the aperture 7 is optimised for a defined solar energy input. The shape of the insulation layer 3 behind the shield 18 is such that the comparably cold shield 18 is protected from the hot radiating absorber assembly components 4, 5, and 6, without shadowing the incident concentrated sunlight. Thus, the input of the solar radiation S is not decreased.

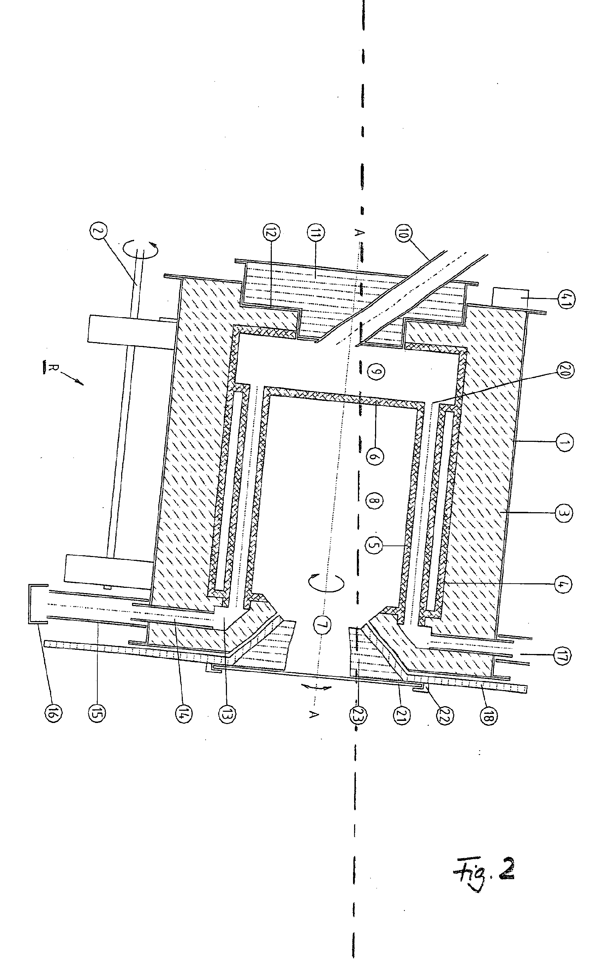

Referring to the embodiment of Fig. 2, optionally the reactor R may be closed with a transparent and high-temperature resistant window 21 mounted with a special holding device 22 at the shield 18. The window 21 may be cooled and kept clear of debris by coolant gas streams (not shown).

Referring again to the embodiment of Fig. 2, optionally the reactor may be equipped with a special secondary concentrator 23, for instance with a CPC (Compound Parabolic Concentrator). The secondary concentrator 23 focuses the solar radiation S on a smaller area, thereby reducing the re-radiation losses. The secondary concentrator 23 is water-cooled and may be mounted directly on the shield 18. The secondary concentrator 23 may be cooled and kept clear of debris by coolant gas streams, too (not shown).

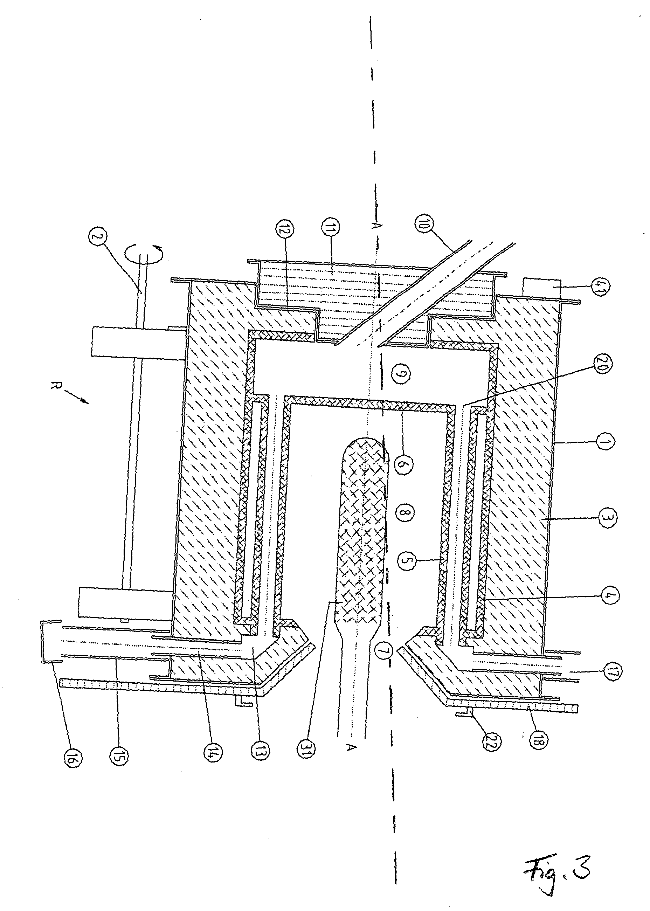

Referring to the embodiment of Fig. 3, optionally the reactor R may be operated with a conventional external heat source 31, which is introduced through the aperture 7 into the absorber cavity 8 in place of the concentrated solar radiation S. Radiation heat sources comprise oil and gas burners, plasma burner, light arcs, induction heating, direct and indirect electric heating elements, etc.

Optionally, for temperature measurements the reactor may be equipped with a telemetry system 41 allowing for wireless data transmission from thermocouples (not shown) placed in the rotary reactor R to a stationary data acquisition system (not shown).

These features lead to a reactor that delivers the heat indirectly through comparably large surfaces to the radiant absorber assembly for the thermal or thermochemical processing of the feed material that is continuously conveyed and homogeneously heated by controlling the speed of rotation and the inclined position. In contrast to conventional processes, a homogeneous and clean thermal or thermochemical processing of materials is ensured. These measures yield high quality of the reaction product, confirming that the method of this invention constitutes an essential engineering progress.

## Claims

1. Reactor (R) for indirect utilization of external radiation heat (S) for thermal or thermochemical material processes, comprising:
a) a containment can (1) having a longitudinal axis (A),
b) an external drive mechanism (2) for controllably rotating the containment can (1) and an external tilt mechanism to deviate said longitudinal axis (A) from a horizontal orientation into a inclined position,
c) an absorber cavity (8) having a substantially cylindrical shape, said absorber cavity (8) being at least partially lined with an insulation layer (3) and being disposed in said containment can (1),
d) said absorber cavity (8) comprising a radiant absorber assembly,
e) said radiant absorber assembly comprising a substantially cylindrical absorber or reflection mantle (4), a number of absorber tubes (5) and a rear wall (6) of absorber or reflection type;
f) said absorber tubes (5) having an inlet (20) and an outlet (13) and being disposed inside said absorber or reflection mantle (4) and being oriented substantially parallel to the longitudinal axis (A) of said absorber or reflection mantle (4),
g) said rear wall (6) and said containment can (1) defining a preheating chamber (9) connected to the inlet (20) of the absorber tubes (5), and
h) said absorber cavity (8) having an aperture (7) allowing said radiant absorber assembly to be heated by the external radiation heat (S) in order to provide the external radiation heat (S) to said preheating chamber (9) and said absorber tubes (5), such that an organic and/or inorganic and/or metallic and/or ceramic material or a mixture thereof are subject to thermal or thermochemical material processing under controlled residence time and/or temperature conditions.

2. Reactor (R) according to claim 1,
**characterized in that**
said radiant absorber assembly heats a feed material in said preheating chamber (9) and in said absorber tubes (5).

3. Reactor (R) according to claim 1 or 2,
**characterized in that**
said external radiation source is concentrated solar energy (S).

4. Reactor (R) according to anyone of the preceding claims,
**characterized in that**
said external drive mechanism (2) and/or said inclined position are controlled in order to effect an appropriate flow of the feed material starting from the preheating chamber (9), entering through the inlets (20) into said absorber tubes (5) and passing through the absorber tubes (5) to the outlets (13) of said absorber tubes (5) while being thermally or thermochemically processed in said preheating chamber (9) and/or absorber tubes (5).

5. Reactor (R) according to claim 4,
**characterized in that**
said containment can (1) rotates around its longitudinal axis (A) or around an arbitrary axis.

6. Reactor (R) according to claim 4 or 5,
**characterized in that**
said absorber tubes (5) rotate around their own longitudinal axis or around an arbitrary axis.

7. Reactor (R) according to anyone of the preceding claims
**characterized in that**
through the outlets (13) of the absorber tubes (5) and through the outlet tubes (14) a reaction product originating from the feed material is continuously removed.

8. Reactor (R) according to claim 7,
**characterized in that**
a ring-channel-shaped collector (15) for collecting the reaction product is provided.

9. Reactor (R) according to claim 7 or 8,
**characterized in that**
said outlet tubes (14) are placed at the end of the absorber tubes (5) as seen in the flow direction of the feed material and are oriented outwardly, preferably through the insulation layer (3) and through the outer shell of the containment can (1).

10. Reactor (R) according to claim 9,
**characterized in that**
the process gas is used to preheating the feed material.

11. Reactor (R) according to anyone of the preceding claims,
**characterized in that**
said absorber tubes (5) have circular, triangular, square, rectangular, trapezoidal, or hexagonal cross-sectional shape.

12. Reactor (R) according to any one of the preceding claims,
**characterized in that**
said radiant absorber assembly is made from a high-temperature resistant and thermally conductive ceramic material, preferably from silicon carbide.

13. Reactor (R) according to anyone of the preceding claims,
**characterized in that**
said absorber tubes (5), said absorber rear wall (6), and said preheating chamber (9) are sealed against said absorber cavity (8) .

14. Reactor (R) according to anyone of the preceding claims,
**characterized in that**
a heat shield (18) is provided to protect the edges of said aperture (7) from said concentrated external radiation heat (S) .

15. Reactor (R) according to claim 14,
**characterized in that**
said heat shield (18) is made from a heat resistant material or is made from a fluid cooled metal, preferably aluminium or copper.

16. Reactor (R) according to claim 14 or 15,
**characterized in that**
said heat shield (18) is ring-shaped and comprises said aperture (7) of said absorber cavity (8).

17. Reactor (R) according to anyone of the preceding claims,
**characterized in that**
said absorber cavity (8) comprises a gas-cooled transparent window (21) mounted on said heat shield (18) for said incident external radiation heat (S).

18. Reactor (R) according to claim 17,
**characterized in that**
said aperture (7) comprises a secondary concentrator (23).

19. Reactor (R) according to anyone of the preceding claims,
**characterized in that**
said absorber cavity (8) comprises a conventional external heat source (31), such as oil or gas burners, plasma burner, light arcs, induction heating, direct and/or indirect electric heating elements.

20. Reactor (R) according to claim 19,
**characterized in that**
said conventional external heat source (31) is introduced through said aperture (7) in place of said external radiation heat (S) in order to continuously supply heat in case of insufficient or missing solar radiation energy.

21. Reactor (R) according to anyone of the preceding claims,
**characterized in that**
as feed material any type of organic, inorganic, metallic, or ceramic solids, as well as mixtures of them, are subject to said thermal or said thermochemical material processing.

22. Reactor (R) according to claim 21,
**characterized in that**
said feed material is fine-grained material, preferably limestone, and said reaction product, preferably lime, is free from combustion gases.
